Europäisches Patentamt

European Patent Office

Office Européen des brevets

(19)

(11) Veröffentlichungsnummer: **0 222 959 B1**

(12) # EUROPÄISCHE PATENTSCHRIFT

(45) Veröffentlichungstag der Patentschrift:
**02.01.91 Patentblatt 91/01**

(51) Int. Cl.⁵ : **G01N 21/90**

(21) Anmeldenummer: **85810544.8**

(22) Anmeldetag: **15.11.85**

(54) **Vorrichtung zur Erkennung von Fehlern, insbesondere Rissen, in transparenten Körpern auf optischem Wege.**

(43) Veröffentlichungstag der Anmeldung:
**27.05.87 Patentblatt 87/22**

(45) Bekanntmachung des Hinweises auf die
Patenterteilung:
**02.01.91 Patentblatt 91/01**

(84) Benannte Vertragsstaaten:
**AT BE CH DE FR GB IT LI LU NL SE**

(56) Entgegenhaltungen:
EP-A- 0 061 021
WO-A-81/03706
DE-A- 2 940 122
FR-A- 2 378 276
FR-A- 2 432 342
US-A- 4 293 219

(73) Patentinhaber: Hermann, Peter Dr.
Ingenieurbüro Haldenstrasse 33
CH-2555 Brügg b. Biel (CH)

(72) Erfinder: Hermann, Peter Dr.
Ingenieurbüro Haldenstrasse 33
CH-2555 Brügg b. Biel (CH)

(74) Vertreter: Seehof, Michel et al
c/o AMMANN PATENTANWAELTE AG BERN
Schwarztorstrasse 31
CH-3001 Bern (CH)

## Beschreibung

Die vorliegende Erfindung bezieht sich auf eine Vorrichtung zur Erkennung von Fehlern, insbesondere Rissen, in transparenten Körpern auf optischem Wege, mit einer Anzahl von Strahlungsquellen, die einer Anzahl Detektoren zugeordnet sind und Kanäle bilden und mit Auswertemitteln, um die Fehler anzuzeigen, wobei Mittel vorhanden sind, um die Kanäle nacheinander und periodisch durchzuschalten und eine Beeinflussung der einzelnen Kanäle untereinander zu vermeiden. Eine solche Vorrichtung ist in der WO-A-81/03706 des gleichen Anmelders beschrieben und bezieht sich insbesondere auf die Prüfung von Hohlgläsern, welche auf Risse und andere Fehler geprüft werden. Diese Rissprüfung basiert auf der Totalreflektion, wobei die Risse am Hohlglas in allen Behälterbereichen, wie Mündung, Schulter, Körper und Boden auftreten und dies mit unterschiedlicher Verteilung. Dabei kommen sowohl Horizontal- als auch Vertikalrisse sowie Verwindungen von Rissflächen vor. Die Hauptorientierung eines Risses kann durch zwei Winkel definiert werden. Die in der Offenlegungsschrift beschriebene Vorrichtung trägt den verschiedenen Rissen Rechnung und erlaubt es, im Multiplexverfahren Messungen durchzuführen. Sie weist jedoch einige Nachteile auf. So ist z.B. im Detektorblock jeweils nur eine Diode aktiv, abhängig vom Kanal. Dadurch ist der vertikale Bereich der Detektion lückenhaft, und enge Risslichtbündel werden nicht oder nicht vollständig erfasst. Ausserdem braucht es in diesem Ausführungsbeispiel viele elektrische Leitungen zum Digitalanalogwandler.

Es ist demgegenüber Aufgabe der vorliegenden Erfindung, eine Erkennungsvorrichtung anzugeben, die einen einfacheren Aufbau aufweist und dabei eine schnellere und sichere Messung von Fehlern sowie eine umfangreiche Auswertung und Erstellung einer Fehlerstatistik erlaubt.

Eine Vorrichtung, die diese Aufgabe löst, ist in den Ansprüchen beschrieben. Die Erfindung wird im Folgenden anhand einer Zeichnung von Ausführungsbeispielen näher erläutert.

Figur 1 zeigt schematisch eine Anordnung der erfindungsgemässen Vorrichtung von oben,

Figur 2 zeigt die Anordnung von Figur 1 von der Seite,

Figur 3 zeigt schematisch den Strahlengang vom Sender zum Empfänger,

Figuren 4 und 5 zeigen zwei Messstellungen der Vorrichtung gemäss Figur 1,

Figur 6 zeigt den Aufbau einer Lichtquelle im Längsschnitt,

Figur 7 zeigt die Lichtquelle von Figur 6 im Schnitt,

Figuren 8 und 9 zeigen eine Ausführungsvariante zu der Lichtquelle der Figuren 6 und 7,

Figur 10 zeigt die Frontplatte mit den Bedienungselementen eines Steuergerätes für die erfindungsgemässe Vorrichtung,

Figur 11 zeigt das Blockschema der Messanordnung,

Figur 12 zeigt das Blockschema der elektronischen Schaltung eines Detektorblocks,

Figur 13 zeigt das vereinfachte Schaltschema einer Blitzlichtlampe,

Figuren 14 und 15 zeigen im Schnitt zwei Ausführungsvarianten von Detektoren,

Figur 16 zeigt eine Detektorenblöcke-Anordnung von oben, und

Figur 17 zeigt die Anordnung von Figur 16 von vorne.

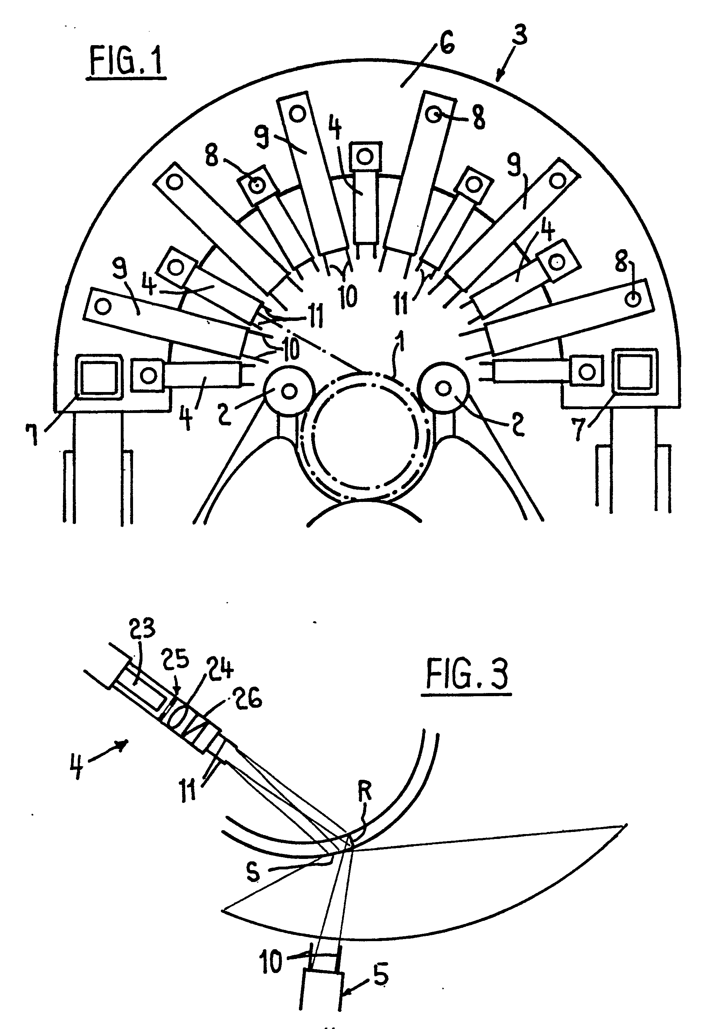

Man erkennt in den Figuren 1 und 2 das Messobjekt 1, eine Flasche, die in einem in diesem Zusammenhang nicht näher beschriebenen Transportsystem steckt und mittels zweier Rollen 2 um ihre Achse gedreht werden kann. Die optische Anordnung 3 umfasst Lichtquellen 4 und Detektoren 5, die in einem Halbkreis um die Oberfläche des Messobjektes angeordnet sind. Die ganze optische Anordnung ist in einem Gestell 6 gehalten. Dieses Gestell 6 umfasst einen Rahmen 7, an dem über Halterungen 8 die Lichtquellen und die Detektoren horizontal oder vertikal beweglich und einstellbar befestigt sind. Wie insbesondere aus Figur 2 hervorgeht, sind die Detektoren in Detektorenblöcke 9 zusammengefasst und werden in der Regel in einer bestimmten Einstellung gelassen, da ihre Stellung im Prinzip nicht kritisch ist. In vorliegendem Beispiel sind die Detektorenblöcke in zwei Ebenen zu je sechs Blöcken angeordnet. Die Lichtquellen wiederum sind in verschieden grossen Gruppen angeordnet und werden jeweils auf das Messobjekt und auf die zu messenden Bereiche eingestellt. Damit möglichst wenig Streulicht in die Detektoren gelangt, sind sie mit Blenden 10 ausgestattet. Desgleichen weisen die Lichtquellen Blenden 11 auf, um den Störlichtanteil bzw. direktes Licht gering zu halten.

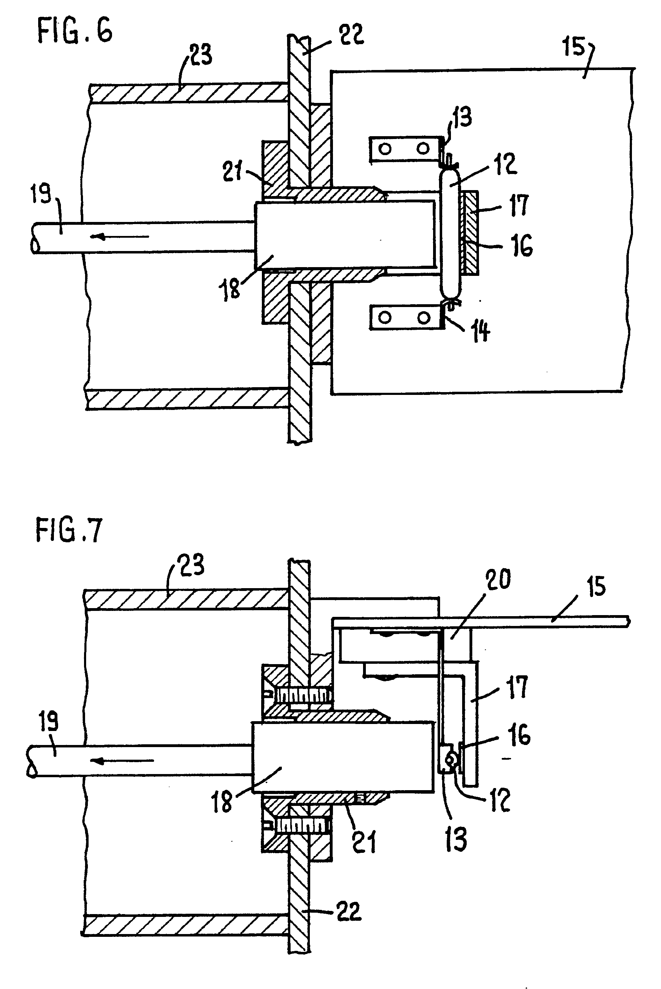

Während man sich bei den Detektoren auf die zur Zeit auf dem Markt erhältlichen Elemente beschränken kann, wobei sie selbstverständlich in Funktion der Lichtquelle auszuwählen sind, ist eine Auswahl unter den Lichtquellen schwieriger, da die erzielbare Messgenauigkeit und Messgeschwindigkeit in erheblichem Masse von den Eigenschaften der Lichtquelle abhängig sind. Breitbandige Lichtquellen sind monochromatischen überlegen bei farbigen Gläsern, speziell, weil die Glaszusammensetzung beim heutigen Recycling stark variiert. In den Figuren 6 und 7 bzw. 8 und 9 sind zwei Varianten eines möglichen Aufbaus einer Lichtquelle dargestellt. Man erkennt in Figur 6 die Edelgasentladungsröhre 12, beispielsweise eine Xenonlampe, die in Klemmhalterungen 13 und 14 gehalten ist, die gleichzeitig als elektrische Anschlüsse dienen und mit der Leiterplatte 15 verbunden sind. Eine solche Entladungsröhre muss mittels Hochspannung gezündet werden, wobei verschiedene Lösungen denkbar sind. Die hier vorgeschlagene Lösung beinhaltet einen Zündspiegel 16, der aus einem leitenden Material besteht und der über einen Spiegelhalter 17 mit Spannmitteln mit Hochspannungsimpulsen beaufschlagt werden kann. Dabei hat der Zündspiegel nicht nur die Aufgabe, die Lampe zu zünden sondern auch die, das auf den Spiegel fallende Licht zurück- bzw. auf ein Glasfiberendstück 18 zu werfen, von welchem es nach Querschnittsveränderung auf einen Glasfiberleiter 19 weggeleitet wird. Zwischen dem Spiegelhalter 17 und der Leiterplatte 15 befindet sich eine Isolationsschicht 20. Das Glasfiberendstück 18 ist über einer Fassung 21 an der Frontplatte 22 des Lichtquellengehäuses befestigt. An die Frontplatte 22 schliesst sich ein Rohr 23 an, in welchem (siehe Figur 3) eine Linse 24 angeordnet ist, die die Formblende 25, die am Ende des Glasfiberleiters angeordnet ist, auf dem Messobjekt abbildet. Nach der Linse befindet sich ein doppelter optischer Keil 26, mit welchem es möglich ist, den Strahlengang zu verändern, d.h. das Bild der Formblende auf dem Messobjekt genau einzustellen. Am Rohr 23 schliesst sich die bereits erwähnte Blende 11 an, die verhindern soll, dass Licht direkt von der Lichtquelle in Detektoren gelangt. Mit der Formblende lassen sich verschiedene Glasbeleuchtungen erzielen, welche in Form und Grösse dem Glaskörper angepasst sind, z.B. längliche Lichtbündel für Körper, kleine Flecken für enge Mündungen. Mit der Blende kann auch die Strahlachse geschwenkt werden.

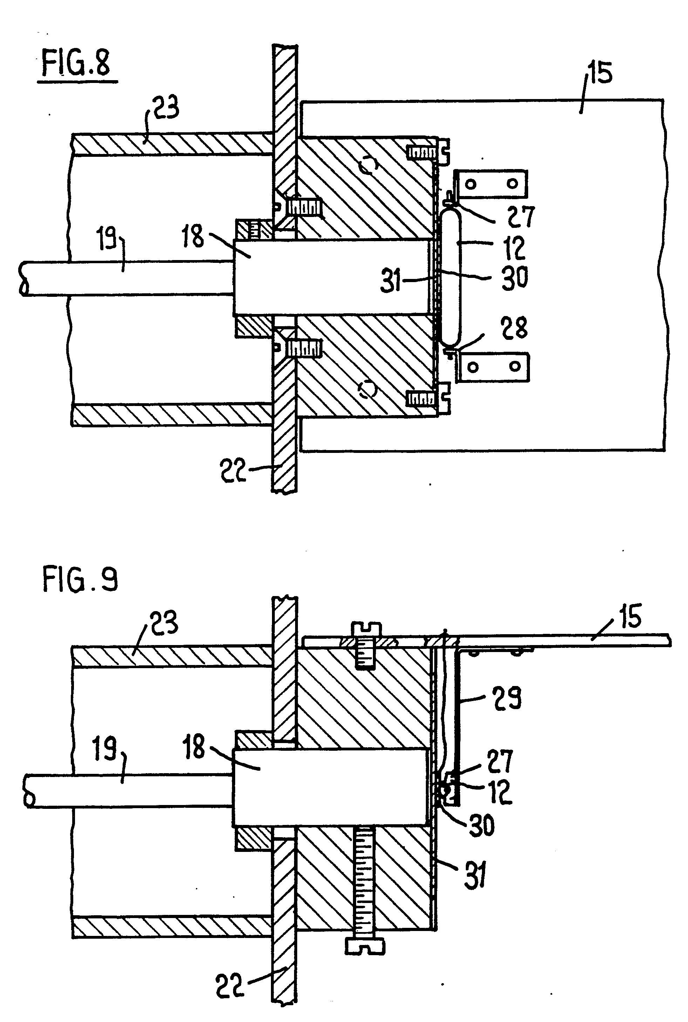

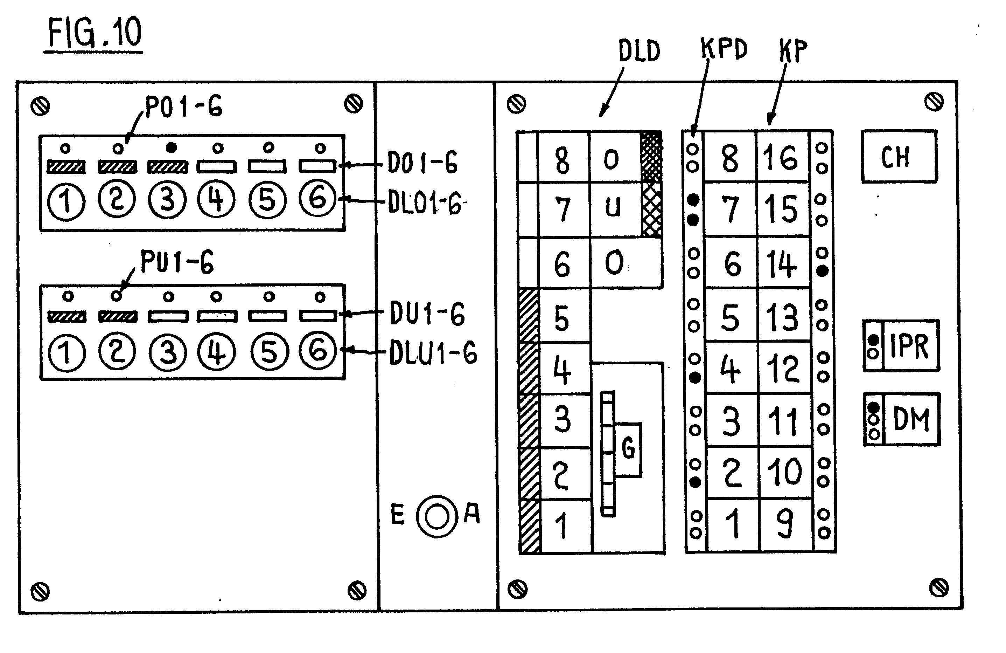

In den Figuren 8 und 9 ist eine Ausführungsvariante aufgezeichnet, in welcher anstatt eines Zündspiegels ein Zündstreifen verwendet wird. Die Edelgasentladungsröhre 12 ist in zwei Klemmhalterungen 27 und 28 gehalten, die über Spannstücke 29 an der elektrischen Leiterplatte 15 befestigt sind und als elektrische Zuführungen dienen. Wie beim vorhergehenden Beispiel liegt die Lampe im Betrieb ständig an Gleichstrom und wird mittels Hochspannungsimpulsen gezündet. Die Zündung wird in dieser Ausführungsvariante durch einen elektrisch leitenden, durchsichtigen Zündstreifen 30 veranlasst. Dieser durchsichtige Zündstreifen befindet sich auf einer Isolierplatte 31, die in der Regel aus Glas besteht und auf einem Halter 32 angeordnet ist, der das Glasfiberendstück 18 mit dem Glasfiberleiter 19 hält.

Durch die Verwendung von Zündspiegeln oder Zündstreifen kann eine definierte Lichtfläche in der Xenonlampe erzielt werden mit einer definierten Leuchtfläche, und durch die Verwendung von Glasfiberleitern können die Lichtverluste klein gehalten werden sowie eine homogene leuchtende Fläche, die auf das Messobjekt abgebildet wird. Die Verwendung von optischen Keilen zum Ablenken der Strahlen auf das Messobjekt gestattet die parallele Anordnung mehrerer Lichtquellen, wodurch sich eine entscheidende Raumersparnis gegenüber vorbekannten Anordnungen ergibt.

Die Detektorenblöcke 9 bestehen aus bis zu acht Detektoren 5, die in einem Streifen angeordnet sind. Da eine möglichst weitgehende Trennung der einzelnen Kanäle voneinander erstrebt wird, sind insbesondere bei den Detektorenblöcken die Blenden 10 wichtig, um Streulicht und direkt einfallendes Licht zu vermeiden. Zweckmässigerweise verwendet man Fotohalbleiterdetektoren.

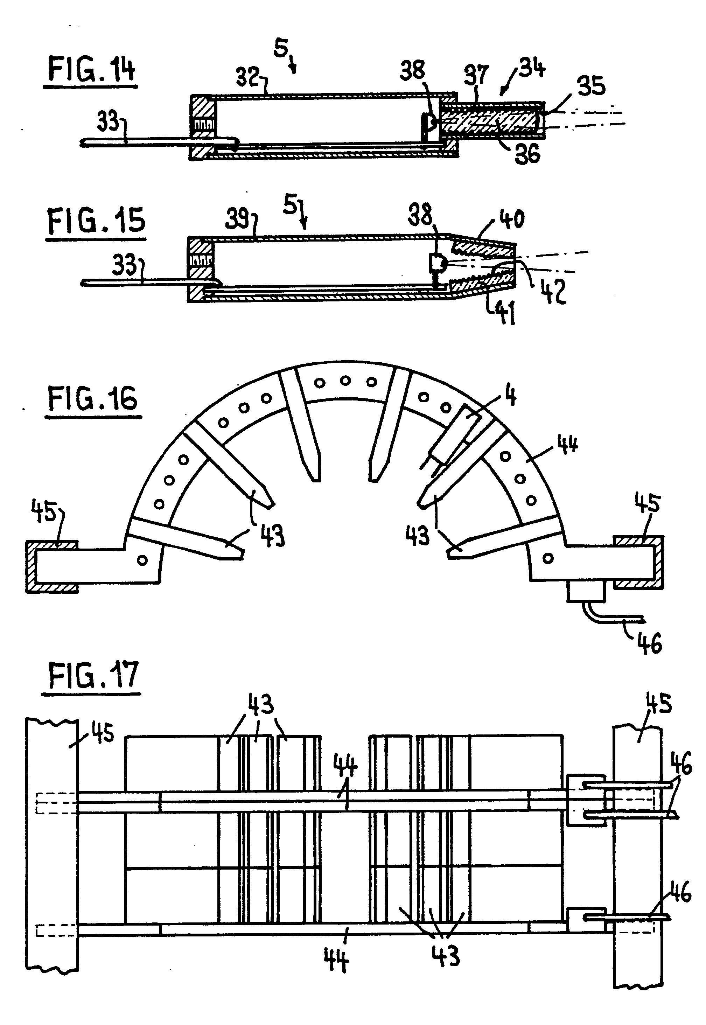

In den Figuren 14 und 15 sind zwei bevorzugte Ausführungsvarianten von Detektoren dargestellt. In Figur 14 weist der Detektor 5 ein Gehäuse 32 auf, aus dem auf der einen Seite die Leitungen 33 hinausragen und auf der anderen Seite eine optische Anordnung 34 befestigt ist, die eine Blende 35 und darin angeordnet, eine Linse 36 umfasst. Die Linse 36 ist in vorliegendem Beispiel eine Zylinderlinse, dessen Seitenflächen 37 aufgerauht und geschwärzt sind, um Streulicht zu absorbieren. Die Zylinderlinse fokussiert das auffallende Licht auf die Empfängerdiode 38. Dieser Detektor besitzt eine höhere Ausbeute und ein kleineres Streulicht als der vorgehend beschriebene.

In Figur 15 weist der Detektor 5 ein Gehäuse 39 mit vorne, d.h. im Bereich der Diode 38, sich verjüngenden Seiten 40 auf, die eine Blende 41 bilden. Die Innenseite 42 der Blende ist ebenfalls aufgerauht und geschwärzt.

In Figur 16 ist schematisch eine mögliche Detektorblökke-Anordnung dargestellt, wobei aus dem Vorhergehenden hervorgeht, dass die Detektorblöcke vertikal einen grossen und horizontal einen eingeschränkten Winkelbereich umfassen. In dieser Figur sind sechs Detektorblöcke 43 starr in einer halbkreisförmigen Halterung 44 eingesetzt. Die einen Halbkreis bildenden Halterungen sind in einem Rahmen 45 gehalten, worin sie vertikal verstellt werden können. In der Halterung sind Bohrungen 46 angebracht, in die die Lichtquellen 4 gesteckt werden können. In Fig. 17 erkennt man drei aufeinander angeordnete Detektorbögen, wobei jeweils ein Bogen umgekehrt auf dem anderen angeordnet ist, wodurch ein besserer Zugang in das Bogeninnere gewährleistet ist. Diese Lösung hat den Vorteil, dass pro Bogen, d.h. pro sechs Detektorblöcke nur ein einziger elektrischer Anschluss 46 benötigt wird, der auch die Speisung für die Lichtquellen beinhalten kann und dass die Detektorenblöcke lückenlos aufeinander angeordnet werden können.

In Figur 3 sind die Strahlengänge eines Risses und eines tolerierten Streuelementes dargestellt. Das von der Lichtquelle 4 stammende, durch die Linse 24 auf das Messobjekt 1 geworfene Licht wird an einem Riss R totalreflektiert und gelangt in das Detektionselement 5. Das an einem Streuelement S gestreute Licht gelangt nur zu einem kleinen Teil in das Detektionselement 5 und wird, falls der Erkennungspegel richtig eingestellt wurde, vom Detektionselement nicht erfasst. Daraus geht hervor, dass bessere Risserkennung erreicht wird, falls der Hauptstrahl des von einem Riss total reflektierten Lichtes auf einen Detektor fällt. Risse kommen aber in verschiedenen Winkellagen vor, und da ein einzelner Detektor nur kleine Risswinkelbereiche gut erfassen kann, wird ein grosser Anteil der Risse mit konventionellen Anordnugen gar nicht bzw. nur durch Nebeneffekte erkannt. Wird die Empfindlichkeit des Detektors derart erhöht, dass noch einige Risslagen über Nebeneffekte ansprechen, so erhöht sich gleichzeitig der Ausschuss von guten Gläsern. Es sind daher eine grössere Anzahl von Detektoren zu verwenden. Umfasst andererseits ein Detektor einen grösseren Raumwinkel als denjenigen des Rissstrahles, so vergrössert sich nur das Streulicht, nicht aber das Nutzlicht. Die Detektorblöcke sind daher in Detektionselemente zu unterteilen, welche klein genug sind, um das maximale Verhältnis von Nutzlicht zu Streulicht zu erreichen.

Zu den vorgehend beschriebenen Apparaturteilen sind verschiedene Varianten denkbar. So ist es möglich, den Strahl der Lichtquelle anstatt mittels zweier Keile durch Prismen oder Spiegel abzulenken, und die Formmaske vor dem Glasfiberleiter kann auswechselbar sein, um verschiedene Formen der auf dem Glas beleuchteten Flächen zu erzielen.

Ausser der Edelgas-, d.h. der Xenon-Röhren sind noch andere Lichtquellen verwendbar, beispielsweise Leuchtoder Laserdioden, Laser oder Mischlicht.

Die weiter oben beschriebene Strahlungsquelle mit Edelgas-Entladungsröhren gemäss den Figuren 6 bis 9 und mit der weiter unten beschriebene Schaltung kann selbstverständlich nicht nur für die Risserkennung sondern auch für andere Beleuchtungsprobleme mit optischen Messsystemen verwendet werden.

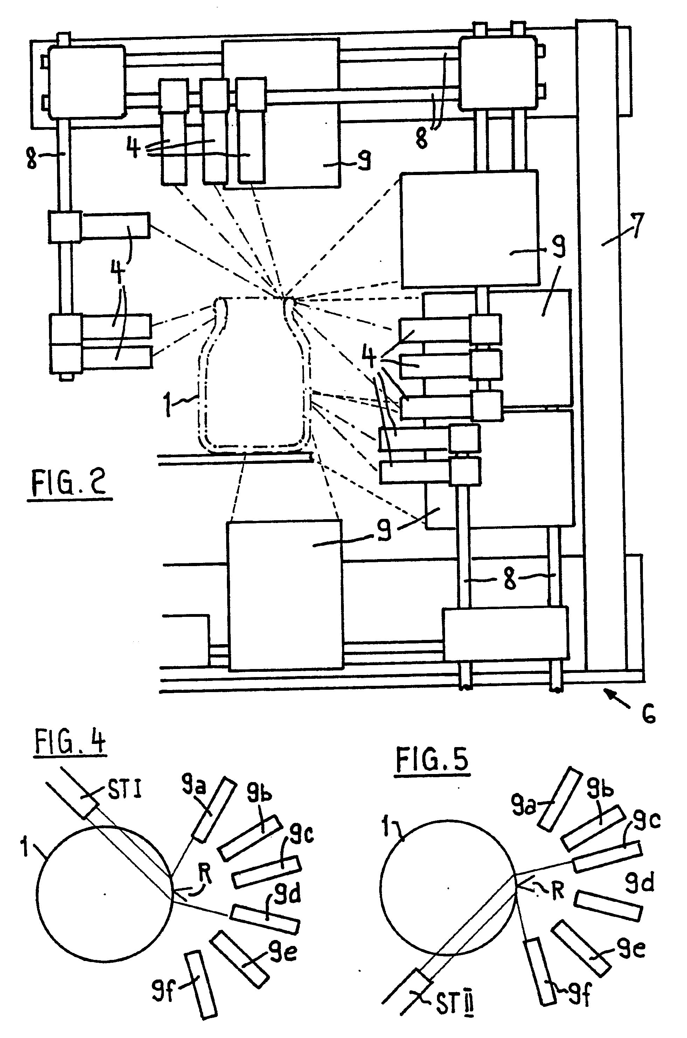

Neben der bis jetzt beschriebenen geometrischen Anordnung des Messsystems spielt die elektronische Schaltung und Steuerung der einzelnen Messelemente eine wesentliche Rolle, wie im Folgenden erläutert wird. Eines der wichtigsten Merkmale der elektronischen Schaltung ist die Bildung von von einander unabhängigen elektrooptischen Kanälen, im vorliegenden Beispiel sind es 16. Dabei wird ein elektrooptischer Kanal definiert als Beleuchtungsimpuls, der von einem oder mehreren synchrongeschalteten Strahlern herstammt und von einem bis allen Detektorenblöcke erfasst und registriert wird. Ein Messzyklus umfasst daher im vorliegenden Beispiel das Aussenden und Erfassen von 16 Beleuchtungsimpulsen. In den Figuren 4 und 5 sind schematisch zwei Strahler in zwei verschiedenen Kanälen dargestellt. Man erkennt in Figur 4 Strahler STI, der auch eine Strahlergruppe sein könnte, der einen Riss R bestrahlt, wobei durch die Schaltelektronik, die weiter unten näher beschrieben wird, die Detektorenblöcke 9a bis 9d eingeschaltet werden, während die zwei Detektorenblöcke 9e und 9f ausgeschaltet werden, da diese das direkte Licht aus dem Strahler erhalten. In den Detektorenblöcken 9a bis 9d werden zudem verschiedene Pegel eingestellt, beispielsweise Pegel 2 für die Detektorenblöcke 9a und 9b, Pegel 3 für Detektorenblock 9c und Pegel 5 für den Detektorenblock 9d. In Figur 5 ist ein anderer Kanal eingeschaltet, d.h. Strahler II oder Strahlengruppe II, wodurch die Detektorenblöcke 9c bis 9f eingeschaltet werden und die Detektorenblöcke 9a und 9b ausgeschaltet sind. Ausserdem werden hier beispielsweise für Detektorenblock 9c Pegel 6, für 9d Pegel 3 und für die Detektorenblöcke 9e und 9f die Pegel 2 eingestellt. Die Durchschaltung der Kanäle erfolgt hintereinander, beispielsweise mit einer Schaltzeit von 25 Mikrosekunden. Durch die individuelle Einstellung der verschiedenen Pegel und der einzelnen Zustände aller Detektorenblöcke in jedem Kanal kann eine sehr scharfe Trennung der Kanäle sowie eine weitgehende Ausschaltung von direktem und Streulicht erzielt werden. Ausserdem wird dadurch eine weitgehende Anpassung an die Problemstellung, d.h. an die Art der Messung erreicht, da an einem Glas verschiedene Bereiche auftreten, die unterschiedlich untersucht werden. So gibt es beispielsweise Flaschen für Mineralwasser, Milch, Wein, Bier, Chemikalien ; Weithalsbehälter für Konserven, Konfitüre, Kindernahrung und einfache Trinkgläser, die allesamt aus braunem oder grünem Glas sein können. Dabei sind alle Rissarten in jeder Winkellage und an jeder Stelle des Behälters zu prüfen sowie Oberflächenschäden, Ausbrüche, sogenannte bird-swings, Glassplitter, nicht voll ausgebildetes Glas und tolerierbare Glasfehler, wie beispielsweise Blasen oder Nähte, zu berücksichtigen.

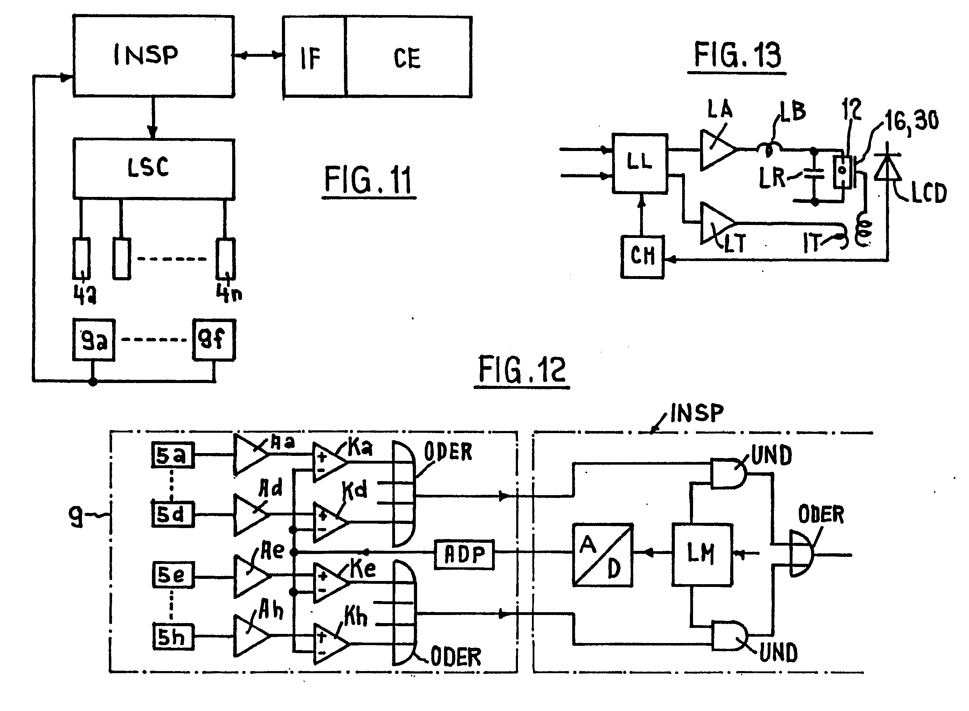

In Figur 11 erkennt man ein stark vereinfachtes Schema der elektronischen Steuerung. Der mit einem Mikroprozessor versehene Steuerungs- und Auswerteteil CE steuert einerseits die hier nicht eingezeichneten Antriebe der verschiedenen Antriebsteile und erhält andererseits Signale von den verschiedenen Sensoren der Maschine. Ausserdem steuert dieses Teil den Inspektionsteil Insp, in welchem einerseits die verchiedenen Bedienungselemente angezeigt werden und andererseits der Mikroprozessor programmiert werden kann. Vom Inspektionsteil gelangt das Signal zu der Lichtquellensteuerung LSC, die die einzelnen Lichtquellen 4a bis 4n ansteuert. Von den angestrahlten Detektorenblöcken 9a bis 9f gelangen die Signale zum Inspektionsteil. Zwischen dem Steuerungsund Auswerteteil CE mit dem Mikroprozessor und dem Inspektionsteil INSP ist ein Speicher-Interface IF eingeschaltet, in welchem die gesamte Messinformation des Glases zeitweise festgehalten wird. Diese ist dadurch vom Mikroprozessor her sehr schnell zugänglich, so dass dieser viel kompliziertere Auswertungen, wie zum Beispiel Koinzidenz-Kriterien, Mehrkanal-Bedingungen oder automatische Pegelprogrammierungen vornehmen kann als ohne Speicher-Interface.

In Figur 12 ist das vereinfachte Blockschema eines Detektorblocks dargestellt. Jedes strahlungsempfindliche Element 5a bis 5d und 5e bis 5h besitzt einen eigenen Impulsverstärker Aa bis Ad und Ae bis Ah mit Gleichstromunterdrückung sowie einen eigenen Komparator Ka bis Kd sowie Ke bis Kh. Die Signale von je vier Komparatoren gelangen zu einem ODER-Tor. Dadurch, dass erst die Logikausgänge der Komparatoren miteinander verknüpft werden, wird erreicht, dass sich die Streulichtanteile der Elemente nicht summieren, wie das der Fall wäre, wenn man die Signale der Elemente zuerst summieren und denn dem Komparator zuführen würde. Die beiden ODER-Tore bestimmen, ob eine gewünschte Anzeige in der oberen oder unteren Detektionselementengruppe erfolgen soll. Vom Odertor gelangt das Signal zu einem UND-Tor, in welchem es mit einem Signal aus dem Pegelspeicher LM verglichen wird, und von dort gelangt es, falls beide Signale gleich sind, zu einem weiteren ODER-Tor und von dort zur Weiterverarbeitung auf den Gerätebus. Der Pegelspeicher LM ist ein programmierbarer Speicher, in welchem die Pegel für die einzelnen Detektionslemente-Gruppen auf die Komparatoren gegeben werden können. Vom Pegelspeicher gelangt das Signal auf einen Digital-Analogwandler D/A und von dort auf einen Adapter DP und schliesslich auf die Minuseingänge der Komparatoren. Die Programmierung des Pegelspeichers erfolgt von der Anzeigetafel gemäss Figur 10 her, wie weiter unten erläutert werden wird. Durch die Verwendung eines geeigneten Mikroprozessors kann mittels guten Gläsern automatisch ein Pegelprogramm für jeden Kanal erstellt werden, derart, dass ein Sicherheitsabstand im Pegel erhalten wird, um nur die Ausschuss-Gläser zu erfassen. Infolge der guten Reproduzierbarkeit des Systems kann das Pegelprogramm auf andere Vorrichtungen übertragen werden. Ferner kann eine kanalweise Statistik erstellt werden, womit das Pegelprogramm manuell verbessert werden kann.

In Figur 13 ist der wesentliche Teil der Lichtquellenschaltung dargestellt. Die Lampenlogik LL erhält Impulse aus einer nicht eingezeichneten Anwahllogik und aus einer Synchronisationsschaltung sowie aus einem Regler CM und steuert über eine Leistungsstufe LA und Ladedrosselspule LB die Speisung der Entladungsröhre 12 sowie über einen zweiten Leistungsverstärker LT und Zündtransformator IT den Zündspiegel 16 oder den Zündstreifen 30. Die Lichtausbeute der Lampe wird über eine Lampensteuerdiode LCD erfasst und auf den Regler CM gegeben, der in Funktion der Lichtausbeute eine Signal an die Lampenlogik abgibt, um so die Lichtausbeute konstant zu halten.

Es ist für einen Fachmann selbstverständlich, dass die einzelnen vorgehend beschriebenen Schaltungen von einem quarzgesteuerten Impulsgenerator, Kanalzähler und Wahlschalter gesteuert werden, wobei diese Steuerung und die Programmierung sowie die Steuerung der verschiedenen Speicher und Logiken im Rahmen des Könnens eines Fachmanns liegt.

In Figur 10 sind die wesentlichen Anzeige- und Schaltelemente einer Ausführungsform der Frontplatte des elektronischen Steuergerätes aufgezeichnet. Auf der linken Seite der Frontplatte befinden sich die Anzeigelemente und Steuerungstasten von je sechs Detektorenblöcken auf zwei Ebenen. Sämtliche Anzeigen dieser Elemente sowie die Programmiermöglichkeiten beziehen sich jeweils auf einen der sechzehn Kanäle, die mit einer anderen Anzeige gewählt werden können, wie nachfolgend noch beschrieben wird. Die obersten, runden Anzeigeelemente PO 1-6 und PU 1-6 zeigen an, welcher Detektorenblock angewählt wurde, um den Pegel einzustellen. In vorliegendem Fall Block 3 der oberen Ebene, d.h. die Anzeigelampe PO 3 leuchtet auf. Die mittleren, rechteckigen Anzeigeelemente DO 1-6 und DU 1-6 zeigen an, welche Detektorenblöcke, in einem bestimmten Kanal, einen Riss anzeigen. In vorliegendem Fall zeigen die Anzeigeelemente DO 1,2,3, und DU 1 und 2 an, dass in diesen Detektorenblöcken Risse festgestellt wurden. Die unteren Tasten DLO 1-6 und DLU 1-6 ermöglichen die Programmierung der Empfindlichkeitspegel der einzelnen Detektorenblöcke. In vorliegendem Fall, wie oben erwähnt, kann durch Drücken der Taste DLO 3 der Pegel dieses Detektorenblocks eingestellt werden. Dieser Pegel wird auf der nebenstehenden Anzeigetafel DLD optisch angezeigt, wobei der Pegel in acht Stufen unterteilt ist. Man erkennt im vorliegenden Beispiel, dass der obere Detektorblock 3 auf Pegel 5 eingestellt worden ist und dass dies sowohl für die obere "o" als auch für die untere "u" Hälfte des Detektorblocks gilt. Mit der Taste O kann der Pegel für den betreffenden Detektorblock gelöscht werden. Die Pegelstufen sind nicht linear programmiert sondern logarithmisch, wobei zudem für die Risserkennung eine Sicherheitsmarge genommen wird. Neben dem Detektorenpegelanzeigefeld befindet sich noch ein programmierbarer Glassortenschalter G, um bei der Pegelprogrammierung die verschiedenen Glassorten berücksichtigen zu können. Daneben befindet sich das Anzeige- und Steuerfeld für die Kanalprogrammierung KP, in welchem einerseits angezeigt wird, in welchem Kanal zuletzt gearbeitet wurde, und mit welchem ein bestimmter Kanal zur Anzeige und Programmierung gewählt werden kann. Jeder Kanal 1 bis 16 besitzt eine durchnumerierte Taste und zwei Kanalanzeigeelemente KPD, wobei die unteren Lampen angeben, in welchen Kanälen gearbeitet wird d.h. ein Detektorblock anspricht und die obere Lampe den gewählten Kanal angibt, in diesem Fall Kanal 7. Ausserdem erkennt man eine summarische Rissanzeige CH, die anzeigt, ob überhaupt für ein Messobjekt ein Riss gefunden wurde und die mit einer Steuerung verbunden ist, um die Messobjekte mit oder ohne Risse auf die dafür vorgesehenen Förderbänder zu lenken. Die Anzeigetafel enthält ferner eine weitere Anzahl von Anzeige- und Steuerelementen, so beispielsweise den Ein- und Ausschalter EA, das Anzeigeund Steuerfeld IPR, welches anzeigt, welcher Teil des Messzyklus in Betrieb ist, d.h. ob der Inspektionszyklus, wie in der Zeichnung angegeben, läuft, oder ob die Anzeigewerte gelöscht werden, untere Lampe, um die nächste Flasche durchzumessen. Die Steuertaste ermöglicht ausserdem, den automatischen Ablauf auszuschalten und auf Handbetrieb umzustellen. Mit dem unteren Feld DM kann der Anzeigemodus angezeigt und beeinflusst werden, beispielsweise ob jeder Kanal hintereinander angezeigt wird, oder ob ein bestimmter Kanal auf der Anzeige bleibt, oder ob nicht kanalspezifisch ein bestimmter Wert angezeigt werden soll.

Ausserdem können am Gerät noch andere Anzeigeelemente und Zähler angeschlossen werden, die insbesondere für die Statistik bedeutsam sind. So ist es zweckmässig, falls jeder Kanal einen Zähler aufweist, dass die Anzahl Risse und Fehler pro Kanal ermittelt und daraus Rückschlüsse gezogen werden können, an welchen Orten besonders viele oder wenige Risse und andere Störungen auftreten. Der Mikroprozessor erlaubt beispielsweise die momentane Ausfallrate bezüglich Kanal, Formen-Nr. und Total laufend zu überwachen und bei Ueberschreitung eines Richtwertes Alarm zu geben und/oder die Anlage abzustellen.

Um die optische Anordnung, insbesondere die Lichtquellen, genau einstellen zu können, und um bestimmte Lichtquellen oder Lichtquellengruppen einem bestimmten Kanal zuordnen zu können, hat es sich als zweckmässig herausgestellt, ein bestimmtes Geräteteil dafür vorzusehen, in welchem die Risse und dergleichen Störungen sichtbar werden. Der Hauptbestandteil eines solchen Hilfsgerätes ist eine Mattscheibe, die bei der Einrichtung des Messkopfes an die Stelle eines Detektorblocks gebracht werden kann. Mittels eines solchen Hilfsgerätes können auf bequeme Art die Risse und dergleichen Störstellen sichtbar gemacht werden. Es ist aber auch möglich, das Hilfsgerät mit einer dazu gehörigen, autonomen Lichtquelle zu versehen und somit ein unabhängiges Hilfs- und Prüfgerät zu erhalten, wodurch es möglich ist, unabhängig von einer automatischen Prüfanlage gewisse Stichproben über Prüfungen oder Vorabklärungen zu machen, um zu bestimmen, wie die gesamte Messapparatur zu gestalten ist. Am zweckmässigsten ist es, die Grösse und Gestalt der Mattscheibe gleich derjenigen eines Detektorblocks zu wählen und gewisse Detektionslinien und eventuel Skalen darauf aufzuzeichnen. Als Lichtquellenhalterung kann vorzugsweise eine gleiche verwendet werden, wie sie bei der Messvorrichtung verwendet wird.

## Ansprüche

1. Vorrichtung zur Erkennung von Fehlern, insbesondere Rissen, in transparenten Körpern auf optischem Wege, mit einer Anzahl Strahlungsquellen (4), die einer Anzahl Detektoren (5) zugeordnet sind und einer elektronischen Schaltung, um die aus einzelnen Beleuchtungsimpulsen einer Serie gebildeten, voneinander unabhängigen elektro-optischen Kanäle nacheinander und periodisch durchzuschalten und um die Fehler auszuwerten, dadurch gekennzeichnet, dass die einzelnen Detektoren (5) zu schmalen, streifenförmigen Detektorenblöcke (9, 43) zusammengefasst sind, die je eine Schaltung aufweisen, worin jedem Detektor (5a bis 5d und 5e bis 5h) ein Impulsverstärker (Aa bis Ad und Ae bis Ah) mit Gleichstromunterdrückung und ein Komparator (Ka bis Kd und Ke bis Kh) zugeordnet ist und die ferner einen programmierbaren Pegelspeicher (LM) besitzt, um die Pegel einer Gruppe von Detektoren (5a bis 5d; 5e bis 5h) einzustellen, wobei die elektronische Schaltung und die Detektorenschaltung ausgebildet sind, nacheinander die Pegel jeder Detektoren-Gruppe für jeden Beleuchtungsimpuls (Kanal) einer Serie unabhängig voneinander einzustellen, und dass sowohl die Detektorenblöcke als auch die Strahlungsquellen an einem Gestell (6) mit einem Rahmen (7,45), an dem Halterungen (8,44) angebracht sind, einstellbar befestigt sind.

2. Vorrichtung nach Anspruch 1, dadurch gekennzeichnet, dass die Detektoren (5) Mittel (10 ;35,37 ;41,42) zur Herabsetzung des Streulichts aufweisen.

3. Vorrichtung nach Anspruch 2, dadurch gekennzeichnet, dass die Mittel zur Herabsetzung des Streulichts Blenden (10,35,41) sind, die an einem Detektorengehäuse (32,39) angebracht sind.

4. Vorrichtung nach Anspruch 2 oder 3, dadurch gekennzeichnet, dass die Mittel zur Herabsetzung des Streulichts aufgerauhte und geschwärzte Flächen (37, 42) sind, die zwischen der Blende (35,41) und der Empfängerdiode (38) angebracht sind.

5. Vorrichtung nach einem der Ansprüche 1 bis 4, dadurch gekennzeichnet, dass der Detektor (5) eine Linse, insbesondere eine Zylinderlinse (36) aufweist, um das einfallende Licht auf die Empfängerdiode (38) zu fokussieren.

6. Vorrichtung nach Anspruch 4 und 5, dadurch gekennzeichnet, dass die Zylinderlinse (36) aufgerauhte und geschwärzte Seiten (3) aufweist.

7. Vorrichtung nach einem der Ansprüche 1 bis 6, dadurch gekennzeichnet, dass die Strahlungsquellen (4) je ein optisches System bestehend aus einem Glasfiberendstück (18) mit veränderlichem Querschnitt, das in ein Glasfiberleiter (19) mündet, einem Blendenrohr (23) mit einer darin angeordneten Linse (24), einer auswechselbaren Formblende (25), Mitteln zur Strahlablenkung (26) und einer Blende (11), aufweisen und dass sie auf dem Gestell (6) parallel zueinander angeordnet sind.

8. Vorrichtung nach Anspruch 7, dadurch gekennzeichnet, dass die Ablenkmittel aus einen doppelten Keil (26), einem Prisma oder einem Ablenkspiegel bestehen.

9. Vorrichtung nach einem der Ansprüche 1 bis 8, dadurch gekennzeichnet, dass die Strahlungsquelle (4) eine Edelgas-Entladungsröhre (12), insbesondere Xenon-Röhre mit fadenförmigem Bogen, aufweist.

10. Vorrichtung nach einem der Ansprüche 1 bis 9, dadurch gekennzeichnet, dass die Strahlungsquelle (4) eine Leuchtdiode, Laserdiode, Laser-Strahler oder eine Mischlichtquelle aufweist.

11. Vorrichtung nach einem der Ansprüche 1 bis 10, dadurch gekennzeichnet, dass jeweils eine Anzahl Detektorenblöcke (9,43) in Ebenen als Einheiten zusammengefasst sind, welche vertikal in einem Rastermass und horizontal in einer Richtung dem Prüfobjekt angepasst werden können.

12. Vorrichtung nach Anspruch 11, dadurch gekennzeichnet, dass eine Anzahl Detektorenblöcke (43) lagenweise in einer halbkreisförmigen Halterung (44) eingesetzt sind und jede Halterung vertikal einstellbar in einem Rahmen (45) gehalten ist, wobei je Halterung höchstens ein elektrischer Anschluss (46) für die Detektoren und gegebenenfalls Lichtquellen (4) benötigt wird.

13. Vorrichtung nach einem der Ansprüche 1 bis 12, dadurch gekennzeichnet, dass die elektronische Schaltung einen mit einem Mikroprozessor versehenen Steuerungs- und Auswerteteil (CE) aufweist, der einerseits Signale aus den verschiedenen Sensoren der Prüfanlage erhält und andererseits die verschiedenen Antriebsteile der Anlage sowie einen Inspektionsteil (INSP) steuert, in welchem die verschiedenen Bedienungselemente der Messvorrichtung angezeigt werden sowie der Mikroprozessor programmiert werden kann und mit einer Strahlungsquellensteuerschaltung (LSC) und mit einer Detektorenblöcke-Schaltung verbunden ist.

14. Vorrichtung nach Anspruch 13, dadurch gekennzeichnet, dass zwischen dem Steuerungs- und Auswerteteil (CE) und dem Inspektionsteil (INSP) ein Speicher-Interface (IF) geschaltet ist, in welchem die gesamten Messinformationen des Glases zeitweise festgehalten werden können.

15. Vorrichtung nach einem der Ansprüche 1 bis 14, dadurch gekennzeichnet, dass jeder Detektorenblock (9, 43) acht Detektoren (5) aufweist und je vier Komparatoren (Ka bis Kd ; Ke bis Kh) mit einem ODER-Tor verbunden sind, von welchen die Signale zu einem UND Tor gelangen, in dem sie mit Signalen aus dem programmierbaren Pegelspeicher (LM) verglichen werden, wobei der Pegelspeicher über einen Digital-Analogwandler (D/A) und einen Adapter (ADP) mit den negativen Eingängen der Komparatoren verbunden ist.

16. Vorrichtung nach einem der Ansprüche 1 bis 15, dadurch gekennzeichnet, dass das Steuergerät der Vorrichtung eine Frontplatte (Fig. 10) aufweist, auf der sich ein Feld mit Anzeigeelementen (PO 1-6, PU 1-6) zur Anzeige eines bestimmten Detektorenblocks, Anzeigeelemente (DO 1-6, DU 1-6) zur Rissanzeige in bestimmten Detektorenblöcken und Tasten (DLO 1-6, DLU 1-6) zur Programmierung der Pegel in den Detektorenblöcke angeordnet ist, wobei die Anzeige und die Wahl von einem gewählten Kanal abhängig ist sowie eine Detektorenpegel-Anzeigetafel (DLD) mit Löschtaste (O) und einem Kanal-Anzeige- und Programmierfeld (KP), in dem sowohl ein bestimmter Kanal programmiert und angezeigt wird als auch angezeigt wird, in welchen Kanälen ein Detektorblock auf Fehler anspricht.

17. Vorrichtung nach Anspruch 16, dadurch gekennzeichnet, dass die Frontplatte eine summarische Rissanzeige (CH) und das Steuergerät je Kanal einen Zähler aufweisen.

18. Vorrichtung nach einem der Ansprüche 1 bis 17, dadurch gekennzeichnet, dass parallel zur Edelgas-Entladungsröhre (12), die an einer Gleichstromquelle liegt und durch Hochspannungsimpulse gezündet wird, ein elektrisch leitender, mit einem Zündtransformator (IT) verbundener Zündspiegel (16) angeordnet ist.

19. Vorrichtung nach einem der Ansprüche 1 bis 17, dadurch gekennzeichnet, dass parallel zur Edelgas-Entladungsröhre (12), die an einer Gleichstromquelle liegt und durch Hochspannungsimpulse gezündet wird, ein transparenter und elektrisch leitender, mit einem Zündtransformator (IT) verbundener Zündstreifen (30) angeordnet ist.

20. Vorrichtung nach Anspruch 18, dadurch gekennzeichnet, dass der Zündspiegel angeordnet ist, das Licht von der Entladungsröhre auf das Glasfiberendstück zu werfen.

21. Vorrichtung nach Anspruch 19, dadurch gekennzeichnet, dass der transparente Zündstreifen auf einer isolierenden Glasplatte (31) angeordnet ist.

22. Vorrichtung nach einem der Ansprüche 18 bis 21, dadurch gekennzeichnet, dass die Schaltung der Strahlungsquelle eine Lampenlogik (LL) enthält, die Signale aus einem Regler (CM) erhält und über eine Leistungsstufe (LA) und Ladedrosselspule (LB) die Speisung der Entladungsröhre und über eine zweite Leistungsstufe (LT) und Zündtransformator (IT) die Hochspannungsimpuls-Versorgung des Zündspiegels (16) oder des Zündstreifens (30) steuert.

23. Vorrichtung nach Anspruch 22, dadurch gekennzeichnet, dass sie eine Lampensteuerdiode (LCD) zur Erfassung der Lichtausbeute aufweist, die mit dem Regler (CM) und mit der Lampenlogik (LL) verbunden ist.

24. Vorrichtung nach einem der Ansprüche 1 bis 23, dadurch gekennzeichnet, dass sie ein Hilfsgerät enthält mit einer Mattscheibe, die die Dimensionen der Frontplatte eines oder mehrerer Detektorblöcke (9, 43) aufweist sowie eine Skala.

## Claims

1. A device for the detection of faults, especially cracks, in transparent bodies by optical means, comprising a number of radiation sources (4) which are assigned to a number of detectors (5), and an electronic circuit in order to switch through the mutually independent electro-optical channels one after another and periodically, said channels being formed by individual lighting pulses of a series, and in order to evaluate the faults, characterized in that the individual detectors (5) are grouped into narrow, strip-shaped detector blocks (9,43) which are provided with a circuit each wherein a pulse amplifier (Aa through Ad and Ae through Ah) with directcurrent suppression and a comparator (Ka through Kd and Ke through Kh) are assigned to each detector (5a through 5d and 5e through 5h), and which circuit further comprises a programmable level memory (LM) in order to adjust the levels of a detector group (5a through 5d ; 5e through 5h), the electronic circuit and the detector circuitry being designed such as to adjust one after another the levels of each detector group mutually independently for each lighting pulse (channel) of a series, and in that both the detector blocks and the radiation sources are adjustably mounted on a support (6) having a frame (7,45) with holders attached thereto.

2. A device according to claim 1, characterized in that the detectors (5) comprise means (1O ; 35,37 ; 41,42) for reducing the scattered light.

3. A device according to claim 2, characterized in that said means for reducing the scattered light are diaphragms (10,35,41) which are secured to a detector housing (32,39).

4. A device according to claim 2 or 3, characterized in that said means for reducing the scattered light are roughened and blackened surfaces (37,42) which are mounted between the diaphragm (35,41) and the receiving diode (38).

5. A device according to one of claims 1 to 4, characterized in that said detector (5) is provided with a lens, in particular a cylindrical lens (36), in order to focus the incident light onto the receiving diode (38).

6. A device according to claim 4 or 5, characterized in that said cylindrical lens (36) is provided with roughened and blackened sides (3).

7. A device according to one of claims 1 to 6, characterized in that said radiation sources (4) each comprise an optical system consisting of a variable cross-section glass fibre end section (18) which opens into a glass fibre conductor (19), of a diaphragm tube (23) with a lens (24) disposed therein, an exchangeable form screen (25), means for ray deflection (26), and a diaphragm (11), and in that they are arranged on a support (6) in parallel to each other.

8. A device according to claim 7, characterized in that said deflection means consist of a double wedge (26), a prism, or a deflecting mirror.

9. A device according to one of claims 1 to 8, characterized in that said radiation source (4) comprises a rare gas discharge tube (12), in particular a xenon tube having a thread-shaped arc.

10. A device according to one of claims 1 to 9, characterized in that said radiation source (4) comprises a light emitting diode, a laser diode, a laser emitter, or a mixed light source.

11. A device according to one of claims 1 to 10, characterized in that a number of respective detector blocks (9,43) in planes are combined to form units which may be vertically adapted in a grid pattern and horizontally in one direction to the test object.

12. A device according to claim 11, characterized in that a number of detector blocks (43) are inserted in a semicircular holder (44) in layers and each holder is vertically adjustably held in a frame (45), one electrical connection (46) at the most per holder being needed for the detectors and, if applicable, for the light sources (4).

13. A device according to one of claims 1 to 12, characterized in that said electronic circuit comprises a control and evaluation section (CE) provided with a microprocessor, said section receiving signals from the different sensors of the detection device, on one hand, and on the other hand, controlling the different driving parts of the device, as well as an inspection section (INSP) wherein the different operating elements of the measuring device are displayed and where said microprocessor is programmable, and which is connected to a radiation source control circuit (LSC) and a detector block circuit.

14. A device according to claim 13, characterized in that a memory interface (IF) is connected between the control and evaluation section (CE) and the inspection section (INSP), in which memory interface (IF) the complete measurement information of the glass may be stored temporarily.

15. A device according to one of claims 1 to 14, characterized in that each detector block (9,43) comprises eight detectors (5) and that groups of four comparators (Ka through Kd ; Ke through Kh) are connected to an OR gate, from where the signals proceed to an AND gate where they are compared to signals from the programmable level memory (LM), said level memory being connected to the negative terminals of the comparators via a digital/ analog converter (D/A) and an adapter (ADP).

16. A device according to one of claims 1 to 15, characterized in that the control section of the device comprises a front panel (Fig. 10) having a field of display elements (PO 1 - 6, PU 1 - 6) for the display of a determined detector block, display elements (DO 1 - 6, DU 1 - 6) for the display of cracks in determined detector blocks, and keys (DLO 1 - 6, DLU 1 - 6) for programming the level of the detector blocks, the display and the selection depending on a selected channel, as well as a detector level display (DLD) having an erasure key (O) and a channel display and channel programming field (KP) in which a determined channel is both programmed and displayed, and where it is displayed in which channels a detector block responds to faults.

17. A device according to claim 16, characterized in that the front panel comprises a combined crack display (CH), and the control section comprises a counter for each channel.

18. A device according to one of claims 1 to 17, characterized in that in parallel to said rare gas discharge tube (12) which is linked to a direct current source and ignited by high tension pulses, an electrically conducting ignition mirror (16) connected to an ignition transformer (IT) is arranged.

19. A device according to one of claims 1 to 17, characterized in that in parallel to said rare gas discharge tube (12) which is linked to a direct current source and ignited by high tension pulses, a transparent and electrically conducting ignition strip (30) connected to an ignition transformer (IT) is arranged.

20. A device according to claim 18, characterized in that said ignition mirror is disposed such as to reflect the light from the discharge tube upon the glass fibre end section.

21. A device according to claim 19, characterized in that said transparent ignition strip is disposed on an insulating glass plate (31).

22. A device according to one of claims 18 to 21, characterized in that the radiation source circuitry comprises a lamp logic (LL) which receives signals from a controller (CM) and controls the supply of the discharge tube via a power stage (LA) and loading choke coil (LB) and the supply of high tension pulses to the ignition mirror (16) or the ignition strip (30) via a second power stage (LT) and ignition transformer (IT).

23. A device according to claim 22, characterized in that it is provided with a lamp control diode (LCD) which is linked to the controller (CM) and to the lamp logic for detection of the light yield.

24. A device according to one of claims 1 to 23, characterized in that it comprises an auxiliary device having a groundglass screen the size of the front panel of one or several detector blocks (9,43) and provided with a scale.

## Revendications

1. Dispositif pour la reconnaisance de défauts, plus particulièrement de fissures dans des corps transparents par voie optique, avec un nombre de sources de rayonnement (4) associées à un nombre de détecteurs (5) pour mettre en communication périodique et l'un après l'autre des canaux électro-optiques indépendants l'un de l'autre formés par des impulsions d'éclairage individuelles d'une série et pour évaluer les défauts, caractérisé en ce que les détecteurs individuels (5) sont réunis en blocs de détection en forme de bandes étroites (9,43) comprenant chacun un circuit, un amplificateur d'impulsions (Aa à Ad et Ae à Ah) avec suppression de la composante continue étant associé à chaque détecteur (5a à 5d et 5e à 5h) et à un comparateur (Ka à Kd et Ke à Kh) et comportant en outre une mémoire de niveau programmable (LM), pour ajuster les niveaux d'un groupe de détecteurs (5a à 5d ; 5e à 5h), le circuit électronique et le circuit de détection étant conçus de manière à ajuster indépendamment l'un de l'autre et l'un après l'autre les niveaux de chaque groupe de détecteurs pour chaque impulsion d'éclairage (canal) d'une série, et en ce que les blocs détecteurs ainsi que les sources de rayonnement sont fixés de manière ajustable à un bâti (6) avec un cadre (7,45) auquel des fixations (8,44) sont montées.

2. Dispositif selon la revendication 1, caractérisé en ce que les détecteurs comprennent des moyens (10 ;35, 37 ;41,42) pour diminuer la lumière diffusée.

3. Dispositif selon la revendication 2, caractérisé en ce que les moyens pour diminuer la lumière diffusée sont des écrans (10,35,41) montés à un boîtier de détecteur (32,39).

4. Dispositif selon la revendication 2 ou 3, caractérisé en ce que les moyens pour diminuer la lumière diffusée sont des surfaces rendues rugueuses et noircies (37,42) montées entre les écrans (35,41) et la diode réceptrice 38.

5. Dispositif selon l'une des revendications 1 à 4, caractérisé en ce que le détecteur (5) comprend une lentille, plus particulièrement une lentille cylindrique (36) pour focaliser la lumière incidente sur la diode réceptrice (38).

6. Dispositif selon la revendication 4 ou 5, caractérisée en ce que la lentille cylindrique (36) comprend des côtés (3) rugueux et noircis.

7. Dispositif selon l'une des revendications 1 à 6, caractérisé en ce que les sources de rayonnement (4) comprennent chacune un système optique consistant en une pièce de fibre de verre (18) avec section variable qui débouche dans un conducteur à fibre de verre (19), un tube de diaphragme (23) avec une lentille (24) disposée à l'intérieur, un écran de forme interchangeable (25), des moyens de déviation des rayons (26) et un écran (11) et en ce qu'elles sont disposées en parallèle sur un support (6).

8. Dispositif selon la revendication 7, caractérisé en ce que les moyens de déviation consistent en un double coin (26), un prisme ou un miroir de déflection.

9. Dispositif selon l'une des revendications 1 à 8, caractérisé en ce que la source de rayonnement (4) comprend un tube de décharge à gaz rare (12), plus particulièrement un tube à xénon avec un arc filiforme.

10. Dispositif selon l'une des revendications 1 à 9, caractérisé en ce que la source de rayonnement (4) comprend une diode émettrice de lumière, une diode laser, un émetteur laser ou une source de lumière mélangée.

11. Dispositif selon l'une des revendications 1 à 10, caractérisé en ce qu'un nombre de blocs détecteurs respectifs (9,43) dans des plans sont réunis en forme d'unités susceptibles d'être adaptées verticalement selon une grille et horizontalement dans une direction vers l'objet à tester.

12. Dispositif selon la revendication 11, caractérisé en ce qu'un nombre de blocs détecteurs (43) sont insérés par couches dans une fixation semicirculaire (44) et en ce que chaque fixation est tenue de manière ajustable verticalement dans un cadre (45), au maximum une connection électrique (46) par fixation étant nécessaire pour les détecteurs et le cas écheant les sources de lumière (4).

13. Dispositif selon l'une des revendications 1 à 12, caractérisé en ce que le circuit électronique comprend un microprocesseur pourvu d'une partie de commande et d'évaluation (CE) qui reçoit d'une part des signaux des différents senseurs de l'installation de test et d'autre part commande les différentes parties d'entraînement de l'installation ainsi qu'une partie d'inspection (INSP) dans laquelle les différents éléments de commande du dispositif de mesure sont affichés, le microprocesseur peut être programmé et être connecté à un circuit de commande de source de rayonnement (LSC) et avec un circuit des blocs détecteurs.

14. Dispositif selon la revendication 13, caractérisé en ce qu'entre la partie de commande et d'évaluation (CE) et la partie d'inspection (INSP) est connecté un interface de mémoire (IF) dans lequel la totalité de l'information du verre peut être stockée momentanément.

15. Dispositif selon l'une des revendications 1 à 14, caractérisé en ce que chaque bloc détecteur (9,43) comprend huit détecteurs (5) et que des groupes de quatre comparateurs (Ka à Kd ; Ke à Kh) sont connectés avec une porte OU à partir de laquelle les signaux arrivent à une porte ET dans laquelle ils sont comparés avec des signaux de la mémoire de niveau programmable (LM), la mémoire de niveau étant connectée par un convertisseur digital-analogique (D/A) et un adaptateur (ADP) avec les entrées négatives des comparateurs.

16. Dispositif selon l'une des revendications 1 à 15, caractérisé en ce que la partie de commande du dispositif comprend une plaque frontale (fig.10) sur laquelle sont disposés un champ d'éléments d'affichage (PO 1-6, PU 1-6) pour afficher un bloc de détecteur déterminé, des éléments d'affichage (DO 1-6, Du 1-6) pour afficher les fissures dans des blocs détecteurs déterminés et des touches (DLO 1-6, DLU 1-6) pour la programmation du niveau dans les blocs détecteurs, l'affichage et le choix étant dépendant du canal choisi ainsi qu'un affichage de niveau de détecteur (DLD) avec une touche d'effacement (0) et un affichage de canal et un champ de programmation (KP) dans lequel un canal déterminé est programmé et affiché et qu'il est aussi affiché dans quel canal un bloc détecteur répond à des défauts.

17. Dispositif selon la revendication 16, caractérisé en ce que la plaque frontale comprend un affichage de fissures combiné (CH) et en ce que la partie de commande comprend un compteur par canal.

18. Dispositif selon l'une des revendications 1 à 17, caractérisé en ce qu'un miroir d'amorçage (16) électriquement conducteur et relié à un transformateur d'amorçage (IT) est disposé en parallèle au tube de décharge à gaz rare (12) qui est connecté à une source de courant continu et amorcé par des impulsions de haute tension.

19. Dispositif selon l'une des revendications 1 à 17, caractérisé en ce qu'une bande d'amorçage (30) transparente et électriquement conductrice reliée à un transformateur d'amorçage (IT) est disposée en parallèle au tube de décharge à gaz rare (12) qui est connecté à une source de courant continu et amorcé par des impulsions de haute tension.

20. Dispositif selon la revendication 18, caractérisé en ce que le miroir d'amorçage est disposé de manière à dévier la lumière du tube à décharge sur la partie d'extrémité de la pièce en fibre de verre.

21. Dispositif selon la revendication 19, caractérisé en ce que la bande d'amorçage transparente est disposée sur une plaque de verre (31) isolante.

22. Dispositif selon l'une des revendications 18 à 21, caractérisé en ce que le circuit de la source de rayonnement contient une logique de lampe (LL) qui reçoit des signaux d'un régulateur (CM) et commande à travers un étage de puissance (LA) et une bobine de choc (LB) l'alimentation du tube à décharge et à travers un deuxième étage de puissance (LT) et un transformateur d'amorçage (IT) l'alimentation en impulsions de haute tension du miroir de déflection (16) ou de la bande d'amorçage (30).

23. Dispositif selon la revendication 22, caracterisé en ce qu'il comprend une diode de commande de lampe (LCD) pour détecter le rendement de la souce lumineuse qui est connectée au régulateur (CM) et avec la logique de lampe (LL).

24. Dispositif selon l'une des revendications 1 à 23, caractérisé en ce qu'il contient un dispositif auxiliaire avec un verre dépoli qui a les dimensions de la plaque frontale ou de plusieurs blocs détecteurs (9,43), ainsi qu'une échelle.

FIG.1

FIG.3

FIG. 2

FIG. 4

FIG. 5

FIG. 6

FIG. 7

FIG.8

FIG.9

FIG.10

**FIG.13**

**FIG.11**

**FIG.12**

FIG.14

FIG.15

FIG.16

FIG.17